# EUROPEAN PATENT SPECIFICATION

(11) **EP 2 255 470 B1**
(45) Date of publication and mention of the grant of the patent: **03.02.2016**
(21) Application number: 09710329.5
(22) Date of filing: 04.02.2009
(51) Int. Cl.: H04H 60/46, H04N 7/173, H04H 60/66, H04H 60/06, H04H 60/72

(54) **A METHOD FOR DYNAMICALLY DEVELOPING A PROGRAMMING SCHEDULE**
VERFAHREN ZUM DYNAMISCHEN ENTWICKELN EINES PROGRAMMABLAUFPLANS
PROCÉDÉ POUR LE DÉVELOPPEMENT DYNAMIQUE D UN PLANNING DE PROGRAMMATION

(30) Priority: 14.02.2008 US 31393
(43) Date of publication of application: 01.12.2010
(73) Proprietor: ALCATEL LUCENT, 92100 Boulogne-Billancourt (FR)
(72) Inventor: MCNEILL, Jared, David, Kanata, Ontario K2K 3M4 (CA); MACDONALD, Joseph, Andrew, Ottawa, Ontario K2N 8K4 (CA); BECKWITH, Marin, Clair, Kanata, Ontario K2M 2K1 (CA)
(74) Representative: Wetzel, Emmanuelle
(86) International application number: PCT/IB2009/051308
(87) International publication number: WO 2009/101609

(56) References cited:
- EP-A- 1 408 692
- WO-A-01/15359
- WO-A-2008/154431
- US-A1- 2006 095 943
- YAMAASHI K ET AL: "USER-CENTERED VIDEO: TRANSMITTING VIDEO IMAGES BASED ON THE USER'S INTEREST" HUMAN FACTORS IN COMPUTING SYSTEMS. CHI '95 CONFERENCE PROCEEDINGS. DENVER, MAY 7 - 11, 1995; [CONFERENCE ON HUMAN FACTORS IN COMPUTING SYSTEMS], NEW YORK, ACM, US, 7 May 1995 (1995-05-07), pages 325-330, XP000538462 ISBN: 978-0-201-84705-5

## Description

### FIELD OF THE INVENTION

The present invention generally relates to program scheduling and, more particularly, to program scheduling within a constrained bandwidth network.

### BACKGROUND OF THE INVENTION

Conventional high bandwidth wired (cable television, fiber optic, etc.) and wireless (satellite) television provider networks have sizable bandwidth allocations within their network transport layers such that they can simultaneously offer programming via hundreds of channels, 24 hours a day, with little concern for running out of broadcasting space. However, other network types which are bandwidth constrained and do not have the amount of broadcast space as the conventional high bandwidth television provider networks. Service providers operating with constrained bandwidth networks deliver their programming content more efficiently than their non-bandwidth constrained counterparts. Moreover, many of the devices receiving programming content via the constrained bandwidth networks are battery powered, making power consumption an additional concern.

### SUMMARY

Various deficiencies of the prior art are addressed by a method, system and recording apparatus adapted to dynamically develop a programming schedule for a constrained bandwidth network. A method according to one embodiment defines a programming schedule for constrained bandwidth network subscribers in response to time-bounded program recording statistics associated with high bandwidth network subscribers.

### BRIEF DESCRIPTION OF THE DRAWINGS

Various embodiments can be readily understood by considering the following detailed description in conjunction with the accompanying drawings, in which:
FIG. 1 depicts a program delivery system; and
FIG. 2 depicts a flow diagram of a method for developing a broadcasting schedule.

To facilitate understanding, identical reference numerals have been used, where possible, to designate identical elements that are common to the figures.

### DETAILED DESCRIPTION OF THE INVENTION

Various embodiments will be primarily described within the context of a method for developing a programming broadcast schedule based on cumulative statistics pertaining to a number of recordings of previously broadcast programming. The schedule is provided to subscribers using and Electronic Programming Guide (EPG). Those skilled in the art and informed by the teachings herein will realize that the present teachings are also applicable to any type of multi-media content and/or network.

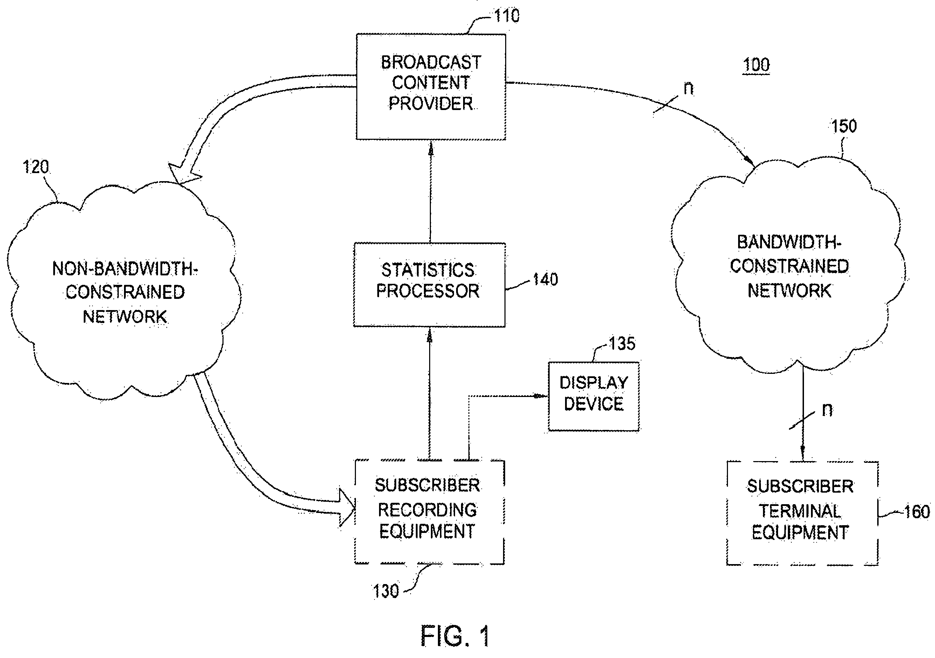

FIG 1 depicts a program delivery system. The system 100 of FIG. 1 includes a broadcast content provider 110, a high bandwidth network 120, subscriber recording equipment 130, a statistics processor 140, a constrained bandwidth network 150, and subscriber terminal equipment 160.

Broadcast content provider 110 communicates with subscriber recording equipment 130 via high bandwidth network 120. High bandwidth network 120 may comprise a cable television network, a fiber-optic network or any other relatively high bandwidth network adapted for the delivery of programming and/or multi-media content. Subscriber recording equipment 130 collectively comprises a plurality of respective subscriber (customer) located recording devices. Each recording device may be a Digital Video Recorder (DVR), Personal Video Recorder (PVR) or any device suitable for recording the content being broadcast by content provider 110. As depicted herein, the subscriber recording equipment 130 optionally includes television signal processing and display circuitry to implement the various reception, demultiplexing, decoding, processing function of a set top box (STB). In this configuration subscriber recording equipment 130 (i.e. STB's) receive television programming signals via the high bandwidth network, and record or otherwise processes the television programming to produce a signal suitable for presentation of the television programming on display device 115. Recording equipment devices 130 are controlled to record present or future television programming in a conventional manner. In addition, recording equipment devices 130 collect various statistics pertaining to such recordings and propagate the statistics to the statistics processor 140.

The statistics processor 140 is configured to obtain various statistics from the recording equipment 130, such as the date, time, subject matter and other information associated with scheduled and/or stored recordings. Using these statistics, the statistics processor 140 generates a broadcast schedule for the broadcast content provider 110 which schedule defines the programming to be provided via the constrained bandwidth network 150. Thus, the generated broadcast schedule is based upon cumulative or aggregated customer usage statistics. Generally speaking, any usage statistics provided to the statistics processor 140 via subscriber recording equipment 130 may be used to generate or adapt the broadcast schedule for the constrained bandwidth network.

Broadcast content provider 110 provides programming in accordance with the generated broadcast schedule to subscriber terminal equipment 160 via high bandwidth network 120. It is noted that the statistics processor 140 is depicted as being remotely located from recording equipment 130. However, the statistics processor 140 may be located proximate recording equipment 130, or proximate content provider 110. It is also noted that the system 100 is depicted as comprising a single broadcast content provider 110 serving the constrained bandwidth and high bandwidth networks 150 and 120. However, in other embodiments different and/or multiple broadcast content providers serve the networks.

In various embodiments, the high bandwidth network 120 is a television network broadcasting a plurality of television programs via multiple channels to residential customers. Examples of such networks include wired (e.g. cable / fiber optic), wireless (e.g. satellite), and various high-speed Internet Protocol Television (IPTV) networks, wherein the location at which the customer receives the broadcast (the point-of-service) is generally fixed.

In various embodiments, the constrained bandwidth 150 networks are telecommunications networks such as mobile telephone networks, or other types of networks that have comparatively less bandwidth assets than high bandwidth network 120. Examples of such networks include Digital Video Broadcasting - Handheld (DVB-H), Worldwide Interoperability for Microwave Access (WiMax), cellular, and various low speed IPTV networks. Generally speaking, the subscriber terminal equipment 160 is not in communication with the high bandwidth network 120, though such communication is contemplated by the inventors in several embodiments.

What is described herein as television programming and the like may be construed as any type of multi-media content conveyed and recorded in the manner described herein. In general, the programming/multi-media may be any form of digital or analog media, the subscriber recording equipment may correspondingly comprise any type of digital or analog recording device, and the high and constrained bandwidth networks may be implemented using multiple types of similar or dissimilar network topologies.

In one embodiment, statistics processor 140 determines a broadcast schedule for constrained bandwidth network 150 on a regular basis, producing a new schedule repeatedly after every time period 'T'. Correspondingly, the content of the schedule is determined based on recording statistics garnered from the high bandwidth network over one or more time periods. For example, if T is selected to be 6 hours, every 6 hours a schedule will be produced based upon the recording statistics associated with recording equipment use of the high bandwidth network for the preceding one or more time periods.

Regardless of the value chosen for 'T', the former embodiment assures programming will always be available on the constrained bandwidth network for at least a time period 'T'. Those skilled in the art will recognize that 'T' may be adjustable, based on factors such as time-of-day, viewing demands, customer requests, filtering (permitting or rejecting certain selected programming), network availability, emergencies, and/or any other factor deemed pertinent by a service provider. Similarly, cumulative recording statistics may be gathered for periods of time spanning back different lengths of time, to include instances wherein the length of time need not be a function of 'T'. In general, the schedule can be updated whenever necessary, with the cumulative recording statistics obtained over any appropriate time period.

In one embodiment, cumulative statistics obtained from the high bandwidth network are analyzed to gauge the respective popularity of each individual program broadcast in the network over a reference time period. Popularity is assessed as a measure of which program was recorded the most (i.e. recorded by the greatest number of recording devices within the collective subscriber equipment 130) versus which was recorded the least, such that the "most recorded" program is designated as *most popular,* and the "least recorded" program *least popular.*

**Table 1, Recording History of a High bandwidth Network**

| **Recording Status** | **Program Title** | **Program Length** |
|---|---|---|
| Most Recorded | Program A | 0:30 |
| | Program B | 0:30 |
| | Program C | 1:00 |
| | Program D | 0:30 |
| | ... | ... |
| | Program X | 0:30 |
| | Program Y | 0:30 |
| | Program Z | 1:00 |
| Least Recorded | ... | ... |

Table 1 above depicts an exemplary statistical compilation of recording history of respective programs on a high bandwidth network, ordered from most popular to least popular. Table 1 displays each programs title, length (running time), and recording (popularity) status arranged from most recorded through least recorded.

In one embodiment, the constrained bandwidth network comprises 'n' channels. The channels comprise respective frequency divided portions of a cumulative spectral allocation within the network transport layer of the services being delivered. However, those skilled in the art and informed by the teachings herein will recognize that the "channels" may also be respective timeslots of a Time Division Multiple Access (TDMA) network, codewords of a Code Division Multiple Access (CDMA) network, or any suitable multi-media service delivery means.

In one embodiment, statistics processor 140 causes (via the generated program guide, a population of the first of the 'n' channels with programs in successive order of illustratively most recorded (popular) through least recorded (recorded), commencing at the beginning of the broadcast timeslot for which the schedule is being developed, and including as many programs that will temporally fit within a period 'T'. Starting with a next channel after the first channel, or another subsequent one of the 'n' channels, the scheduled programming resumes at the beginning of the temporal period 'T', with the next program in successive order of most through least recorded programs, after the last one that was able to temporally fit within the period 'T' on the first of the 'n' channels. As on the first of the 'n' channels, the next or subsequent channel is filled with as many programs that will temporally fit within the period 'T', where after this process continues in successive fashion on the remaining cannels until all available broadcasting space (bandwidth/channels and time) within the schedule is allocated.

**Table 2, Schedule Developed with Cumulative Recording Statistics**

| | **6:00 PM** | **6:30 PM** | **7:00 PM** | **7:30 PM** | **8:00 PM** | **8:30 PM** |
|---|---|---|---|---|---|---|
| CH 1 | Program A | Program B | Program C | | Program D | ... |
| CH 2 | Program Q | Program R | | Program S | Program T | ... |
| CH 3 | ... | ... | ... | ... | ... | ... |
| ... | ... | ... | ... | ... | ... | ... |
| CH 'n' | Program X | Program Y | Program Z | | ... | ... |

Table 2 above depicts an exemplary schedule developed with the methodologies discussed above, utilizing the statistical data of Table 1. Specifically, Table 2 shows the most recorded (popular) programs of Table 1 scheduled for broadcast via the first of 'n' channels (CH 1), with progressively lesser recorded (popular) programs selected for subsequent channels and, finally, the least recorded (popular) programming scheduled on a final channel 'n'.

In one embodiment, a broadcasting schedule such as displayed in Table 2 is broadcast via the constrained bandwidth network 150 and displayed via respective Electronic Programming Guide (EPG) interfaces of subscriber terminal equipment 160 receiving services via the constrained bandwidth network 150 while the content(s) of the EPG is/are being broadcast. Such devices include, a vehicle audio-visual system or video capable cellular phone.

It will be appreciated that many of the aforementioned subscriber devices communicating via the constrained bandwidth network may be battery powered. In one embodiment, a means for reducing power consumption of these devices is provided. By specifying that a broadcasting schedule for the constrained bandwidth network be developed in a periodic fashion after every regular time period 'T', it is not necessary for devices on the constrained bandwidth network to remain powered on at all times to be assured of always receiving the most recent EPG. Since the time at which a new/refreshed EPG is broadcast will always be known (e.g. determined after every period of time 'T'), the devices on the network may go into a "sleep" or other power conserving mode when they are inactive or not being utilized. Correspondingly, the subscriber devices may be configured to only "wake-up" (come out of the power conserving mode) periodically after every said period 'T', to receive the new/refreshed EPG, and then go back to sleep if necessary.

In another embodiment, the determined schedule for the constrained bandwidth network is not exclusively determined using the recording statistics (status) of the programming on the high bandwidth network. Specifically, the service or network provider causes programs to be skipped, rebroadcast, rearranged, and/or mixed with programming that was not initially broadcast/recorded on the high bandwidth network.

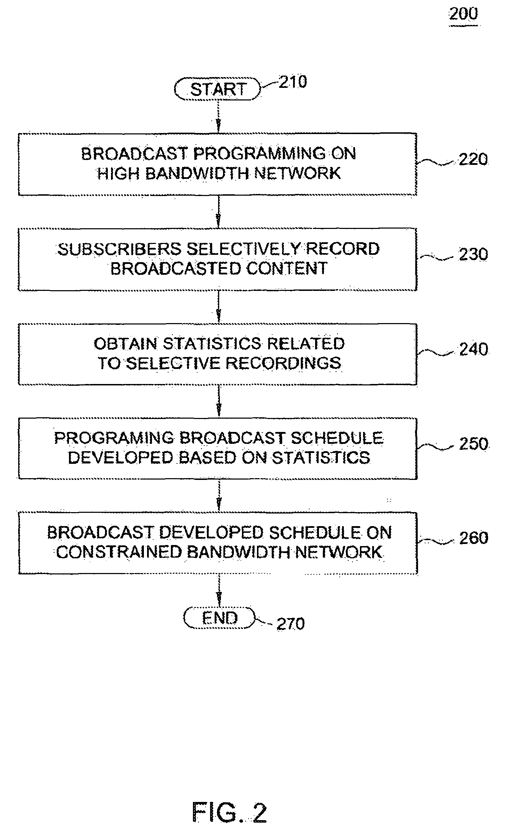

FIG. 2 depicts a method for developing and broadcasting a schedule based on cumulative recording statistics. Specifically, the method 200 is entered at step 210 and proceeds to step 220, where the provider broadcasts programming content on the high bandwidth network. At step 230 subscribers selectively record the broadcasted content based on their personal viewing preferences. At step 240 the provider (e.g. via statistics processor 140) obtains statistics related to the selective recordings. At step 250, a programming broadcast schedule of length 'T' is determined for the constrained bandwidth network based on the statistics obtained at step 240. Once determined, the content of the schedule is broadcast over 'n' channels of the constrained bandwidth network at step 260.

In another embodiment, the various methodologies described above are implemented on and/or executed from a computer readable medium. The computer readable medium may be a hard drive, computer disk, Read Only Memory (ROM), Programmable Read Only Memory (PROM), Random Access Memory (RAM), or any other form of volatile or non-volatile memory, from which the methodologies represented by the invention may be retrieved and executed by any computer or other device configured to operate with said medium. On the computer readable medium is a program configured to implement obtaining from a plurality of high bandwidth programming subscribers, cumulative statistics of recordings initiated by said subscribers for programming delivered by a provider during a period of time; determining a programming schedule in response to the obtained statistics; and broadcasting programming to constrained bandwidth programming subscribers according to the programming schedule.

In yet another embodiment, a multi-media recording apparatus for communicating with the previously described statistics processor 140 is provided, comprising means for providing data detailing cumulative statistics of recordings initiated by subscribers for programming delivered by a provider during a period of time to a statistics processor, wherein the statistics processor comprises: means for obtaining, from a plurality of programming subscribers, cumulative statistics of recordings initiated by said subscribers for programming delivered by a provider during a period of time; and means for determining a programming schedule in response to the obtained statistics.

While the foregoing is directed to various embodiments of the present invention, other and further embodiments of the invention may be devised without departing from the basic scope thereof. As such, the appropriate scope of the invention is to be determined according to the claims, which follow.

## Claims

1. A method, comprising:
obtaining (240), from a plurality of high bandwidth programming subscribers to which programming can be delivered via a high bandwidth network (120),
cumulative statistics of recordings initiated by said subscribers for programming delivered during a period of time via the high bandwidth network (120), wherein
the cumulative statistics provide a ranking of programs from a most recorded program to a least recorded program;
determining (250) a programming schedule for a period 'T' in response to the obtained statistics; and
periodically broadcasting (260), after every said period 'T', programming to constrained bandwidth programming subscribers via a constrained bandwidth network (150) having less bandwidth assets than the high bandwidth network (120), according to the programming schedule, wherein the constrained bandwidth network comprises 'n' channels where 'n' is an integer, and
wherein determining a programming schedule comprises:
populating the first of the 'n' channels with programs in successive order of most recorded through least recorded, including as many programs as will temporally fit within the period 'T', and
populating successive channels by resuming at the beginning of the temporal period 'T', with the next program in successive order of most through least recorded programs, after the last one that was able to temporally fit within the period 'T' on the previous of the 'n' channels, wherein each respective channel is populated with as many programs from the respectively continuing successive order of most through least recorded programs that will temporally fit within the period 'T' on each channel.

2. The method of claim 1, further comprising providing the determined programming schedule to the constrained bandwidth programming subscribers as an electronic programming guide.

3. The method of claim 2, wherein programming delivered by a provider comprises a television broadcast including a first plurality of programs, and the contents derived from the statistics comprises a second plurality of programs comprising a subset of the first plurality of programs.

4. The method of claim 3, wherein determining a programming schedule takes place periodically prepared at a frequency having the period 'T,' wherein 'T' is adjustable.

5. The method of claim 1, wherein the channels comprise at least one of respective spectral portions of a frequency division multiple access network, respective timeslots of a time division multiple access network, respective codewords a code division multiple access network, or combinations thereof.

6. The method of claim 1, wherein the constrained bandwidth network comprises at least one of a cellular network, a television provider network, an internet service provider network, or combinations thereof.

7. The method of claim 1, wherein broadcasting programming to constrained bandwidth programming subscribers takes place at the same time the electronic programming guide is transmitted.

8. A program delivery system, comprising:
a first high bandwidth network (120) for delivering programming to a plurality of high bandwidth programming subscribers;
a constrained bandwidth network (150) having less bandwidth assets than the high bandwidth network;
a system (110, 140) for determining a broadcast schedule for a period 'T' comprising: a statistics processor (140);
wherein the statistics processor comprises:
means for obtaining, from the plurality of programming subscribers, cumulative statistics of recordings initiated by said subscribers for programming delivered by a provider during a period of time via the high bandwidth network, wherein the cumulative statistics provide a ranking of programs from a most recorded program to a least recorded program; means for determining a programming schedule in response to the obtained statistics; and
means (110) for periodically broadcasting, after every said period 'T', programming to constrained bandwidth programming subscribers via the constrained bandwidth network, according to the programming schedule, wherein the constrained bandwidth network comprises 'n' channels where 'n' is an integer,
wherein the means for determining the programming schedule are adapted to:
populate the first of the 'n' channels with programs in successive order of most recorded through least recorded, including as many programs as will temporally fit within the period 'T', and
populate successive channels by resuming at the beginning of the temporal period 'T', with the next program in successive order of most through least recorded programs, after the last one that was able to temporally fit within the period 'T' on the previous of the 'n' channels,
wherein each respective channel is populated with as many programs from the respectively continuing successive order of most through least recorded programs that will temporally fit within the period 'T' on each channel.

## Patentansprüche

1. Verfahren, umfassend:
Einholen (240) kumulativer Statistiken von einer Vielzahl von Abonnenten hochbreitbandiger Programminhalte, denen die Programminhalte über ein hochbreitbandiges Netzwerk (120) zur Verfügung gestellt werden können, zu den durch besagte Abonnenten gestarteten Aufzeichnungen von über einen bestimmten Zeitraum hinweg über das hochbreitbandige Netzwerk (120) zur Verfügung gestellten Programminhalten, wobei die kumulativen Statistiken ein Ranking von Programmen liefern, welches vom am häufigsten aufgezeichneten zum am seltensten aufgezeichneten Programm reicht;
Festlegen (250) einer Planung von Programminhalten für einen Zeitraum 'T' in Reaktion auf die eingeholten Statistiken; und
gemäß der Planung von Programminhalten das regelmäßige Senden (260) der Programminhalte nach jedem besagten Zeitraum 'T' an Abonnenten von Programminhalten mit begrenzter Bandbreite über ein Netzwerk mit begrenzter Bandbreite (150) mit geringerer verfügbarer Bandbreite als bei einem hochbreitbandigen Netzwerk (120), wobei das Netzwerk mit begrenzter Bandbreite 'n' Kanäle umfasst, wobei 'n' eine ganze Zahl ist und wobei das Festlegen einer Planung von Programminhalten umfasst:
Besetzen des ersten der 'n' Kanäle mit Programmen in der Reihenfolge vom am häufigsten aufgezeichneten zum am seltensten aufgezeichneten Programm, dabei so viele Programme berücksichtigend, wie von ihrer Dauer her in den Zeitraum 'T' passen, und
Besetzen nachfolgender Kanäle durch die zum Beginn des Zeitraums 'T' erfolgende Fortsetzung mit dem nächsten Programm aus der Reihenfolge vom am häufigsten aufgezeichneten zum am seltensten aufgezeichneten Programm, und zwar beginnend mit dem nächsten nach dem letzten Programm, das von der Dauer her in Zeitraum 'T' des vorangegangenen Kanals der 'n' Kanäle gepasst hat, wobei jeder jeweilige Kanal mit so vielen Programmen aus der jeweiligen Reihenfolge vom am häufigsten aufgezeichneten zum am seltensten aufgezeichneten Programm besetzt wird, wie in den Zeitraum 'T' des jeweiligen Kanals passen.

2. Verfahren nach Anspruch 1, weiterhin das Bereitstellen der festgelegten Planung von Programminhalten als elektronischer Programmführer für die Abonnenten von Programminhalten mit begrenzter Bandbreite umfassend.

3. Verfahren nach Anspruch 2, wobei die von einem Anbieter zur Verfügung gestellten Programminhalte eine Fernsehsendung umfassen, die eine erste Vielzahl von Programmen enthält, und wobei die von der Statistik abgeleiteten Inhalte eine zweite Vielzahl von Programmen umfassen, die eine Auswahl aus der ersten Vielzahl von Programmen enthält.

4. Verfahren nach Anspruch 3, wobei das Festlegen einer Planung von Programminhalten regelmäßig mit einer vorgegebenen Frequenz mit Zeitraum 'T' erfolgt, wobei 'T' verändert werden kann.

5. Verfahren nach Anspruch 1, wobei die Kanäle mindestens entweder jeweilige Spektralanteile eines Frequenzmultiplexnetzwerks, jeweilige Zeitschlitze eines Zeitmultiplexnetzwerks, jeweilige Codewörter eines Codemultiplexnetzwerks oder Kombinationen daraus umfassen.

6. Verfahren nach Anspruch 1, wobei das Netzwerk mit begrenzter Bandbreite mindestens entweder ein zellulares Funknetzwerk, ein Fernsehanbieternetzwerk, ein Netzwerk eines Internetdienstanbieters oder eine Kombination daraus umfasst.

7. Verfahren nach Anspruch 1, wobei das Senden der Programminhalte an Abonnenten von Programminhalten mit begrenzter Bandbreite gleichzeitig mit der Übermittlung eines elektronischen Programmführers erfolgt.

8. Programmbereitstellungssystem, umfassend:
ein erstes hochbreitbandiges Netzwerk (120) für die Bereitstellung von Programminhalten für eine Vielzahl von Abonnenten hochbreitbandiger Programminhalte;
ein Netzwerk mit begrenzter Bandbreite (150) mit geringerer verfügbarer Bandbreite als das hochbreitbandige Netzwerk;
ein System (110, 140) für das Festlegen einer Sendeplanung für einen Zeitraum 'T', umfassend: einen Statistikprozessor (140);
wobei der Statistikprozessor umfasst:
Mittel für das das Einholen kumulativer Statistiken von einer Vielzahl von Abonnenten von Programminhalten zu den durch besagte Abonnenten gestarteten Aufzeichnungen der von einem Anbieter über einen bestimmten Zeitraum hinweg über ein hochbreitbandiges Netzwerk zur Verfügung gestellten Programminhalte, wobei die kumulativen Statistiken ein Ranking von Programmen liefern, welches vom am häufigsten aufgezeichneten zum am seltensten aufgezeichneten Programm reicht;
Mittel für das Festlegen einer Planung von Programminhalten in Reaktion auf die eingeholten Statistiken; und
Mittel (110), um nach jedem der besagten Zeiträume gemäß der Planung von Programminhalten über das Netzwerk mit begrenzter Bandbreite regelmäßig Programminhalte an Abonnenten von Programminhalten mit begrenzter Bandbreite zu senden, wobei das Netzwerk mit begrenzter Bandbreite 'n' Kanäle umfasst, wobei 'n' eine ganze Zahl ist,
wobei die Mittel für das Bestimmen der Planung von Programminhalten ausgelegt sind für:
Besetzen des ersten der 'n' Kanäle mit Programmen in der Reihenfolge vom am häufigsten aufgezeichneten zum am seltensten aufgezeichneten Programm, dabei so viele Programme berücksichtigend, wie von ihrer Dauer her in den Zeitraum 'T' passen, und
Besetzen nachfolgender Kanäle durch die zum Beginn des Zeitraums 'T' erfolgende Fortsetzung mit dem nächsten Programm aus der Reihenfolge vom am häufigsten aufgezeichneten zum am seltensten aufgezeichneten Programm, und zwar beginnend mit dem nächsten nach dem letzten Programm, das von der Dauer her in Zeitraum 'T' des vorangegangenen Kanals der 'n' Kanäle gepasst hat,
wobei jeder jeweilige Kanal mit so vielen Programmen aus der jeweiligen Reihenfolge vom am häufigsten aufgezeichneten zum am seltensten aufgezeichneten Programm besetzt wird, wie in den Zeitraum 'T' des jeweiligen Kanals passen.

## Revendications

1. Procédé comprenant les étapes suivantes :
obtenir (240), de la part d'une pluralité d'abonnés de programmation à grande largeur de bande auxquels la programmation peut être délivrée par le biais d'un réseau à grande largeur de bande (120), des statistiques cumulées d'enregistrements initiés par lesdits abonnés pour la programmation délivrée pendant une période par le biais du réseau à grande largeur de bande (120), les statistiques cumulées fournissant un classement des programmes d'un programme le plus enregistré à un programme le moins enregistré ;
déterminer (250) un horaire de programmation pour une période 'T' en réponse aux statistiques obtenues ; et
diffuser périodiquement (260), après chacune desdites périodes 'T', la programmation aux abonnés de programmation à largeur de bande contrainte par le biais d'un réseau à largeur de bande contrainte (150) possédant moins de ressources de largeur de bande que le réseau à grande largeur de bande (120),
conformément à l'horaire de programmation, le réseau à largeur de bande contrainte comprenant 'n' canaux, 'n' étant un nombre entier, et la détermination d'un horaire de programmation comprend les étapes suivantes :
charger le premier des 'n' canaux avec des programmes dans l'ordre successif du plus enregistré au moins enregistré, en incluant autant de programmes qui s'adapteraient temporairement à l'intérieur de la période 'T', et
charger les canaux successifs en reprenant au début de la période temporaire 'T', avec le programme suivant dans l'ordre successif du plus enregistré au moins enregistré, après que le dernier a pu s'adapter temporairement à l'intérieur de la période 'T' sur le précédent des 'n' canaux,
chaque canal respectif étant chargé avec autant de programmes de l'ordre successif se poursuivant respectivement du programme le plus enregistré au moins enregistré qui s'adapteraient temporairement à l'intérieur de la période 'T' sur chaque canal.

2. Procédé selon la revendication 1, comprenant en outre fournir l'horaire de programmation déterminé aux abonnés de programmation à largeur de bande contrainte sous la forme d'un guide de programmation électronique.

3. Procédé selon la revendication 2, dans lequel la programmation délivrée par un fournisseur comprend une télédiffusion incluant une première pluralité de programmes, et les contenus dérivés des statistiques comprennent une deuxième pluralité de programmes comprenant un sous-ensemble de la première pluralité de programmes.

4. Procédé selon la revendication 3, dans lequel la détermination d'un horaire de programmation a lieu de manière préparée périodiquement à une fréquence ayant une période 'T', 'T' étant réglable.

5. Procédé selon la revendication 1, dans lequel les canaux comprennent au moins un parmi
des portions spectrales respectives d'un réseau à accès multiple par répartition en fréquence,
des créneaux temporels respectifs d'un réseau à accès multiple par répartition dans le temps,
des mots de code respectifs d'un réseau à accès multiple par répartition en code, ou des combinaisons de ceux-ci.

6. Procédé selon la revendication 1, dans lequel le réseau à largeur de bande contrainte comprend au moins un parmi un réseau cellulaire, un réseau de fournisseur de télévision, un réseau de fournisseur de service Internet, ou une combinaison de ceux-ci.

7. Procédé selon la revendication 1, dans lequel la diffusion de la programmation aux abonnés de programmation à largeur de bande contrainte a lieu au même moment que le guide de programmation électronique est transmis.

8. Système de délivrance de programme, comprenant :
un premier réseau à grande largeur de bande (120) destiné à délivrer une programmation à une pluralité d'abonnés de programmation à grande largeur de bande ;
un réseau à largeur de bande contrainte (150) possédant moins de ressources de largeur de bande que le réseau à grande largeur de bande ;
un système (110, 140) destiné à déterminer un horaire de programmation pour une période 'T' comprenant : un processeur de statistiques (140) ;
le processeur de statistiques comprenant :
des moyens pour obtenir, de la part de la pluralité d'abonnés de programmation à grande largeur de bande, des statistiques cumulées d'enregistrements initiés par lesdits abonnés pour la programmation délivrée par un fournisseur pendant une période par le biais du réseau à grande largeur de bande, les statistiques cumulées fournissant un classement des programmes d'un programme le plus enregistré à un programme le moins enregistré ;
des moyens (110) pour diffuser périodiquement, après chacune desdites périodes 'T', la programmation aux abonnés de programmation à largeur de bande contrainte par le biais du réseau à largeur de bande contrainte,
conformément à l'horaire de programmation, le réseau à largeur de bande contrainte comprenant 'n' canaux, 'n' étant un nombre entier,
les moyens destinés à déterminer l'horaire de programmation étant adaptés pour:
charger le premier des 'n' canaux avec des programmes dans l'ordre successif du plus enregistré au moins enregistré, en incluant autant de programmes qui s'adapteraient temporairement à l'intérieur de la période 'T', et
charger les canaux successifs en reprenant au début de la période temporaire 'T', avec le programme suivant dans l'ordre successif du plus enregistré au moins enregistré, après que le dernier a pu s'adapter temporairement à l'intérieur de la période 'T' sur le précédent des 'n' canaux,
chaque canal respectif étant chargé avec autant de programmes de l'ordre successif se poursuivant respectivement du programme le plus enregistré au moins enregistré qui s'adapteraient temporairement à l'intérieur de la période 'T' sur chaque canal.
